# EUROPEAN PATENT SPECIFICATION

(11) **EP 1 533 252 B1**
(45) Date of publication and mention of the grant of the patent: **04.03.2009**
(21) Application number: 04014060.0
(22) Date of filing: 16.06.2004
(51) Int. Cl.: B65D 88/06, B65D 88/02, B65D 88/00, B65D 88/76, E03F 11/00

(54) **Method for making a large storage container of moulded plastics for use underground and large storage container thus obtained**
Verfahren zur Herstellung eines aus Kunststoff geformten Grossbehälters sowie auf diese Weise angefertigte Grossbehälter
Procédé de fabrication d'un grand conteneur en plastique moulé utilisé dans le sol ainsi que le grand conteneur ainsi obtenu

(30) Priority: 21.11.2003 IT PI20030090
(43) Date of publication of application: 25.05.2005
(73) Proprietor: ZETAPLAST S.p.A., 56010 Vecchiano (IT)
(72) Inventor: Vitarelli, Mario, 56019 Nodica-Vecchiano (PI) (IT)
(74) Representative: Celestino, Marco

(56) References cited:
- WO-A-02/076837
- FR-A- 2 715 385
- FR-A- 2 862 886
- US-A- 4 961 670
- US-B1- 6 491 054

## Description

### Field of the invention

The present invention relates to a method for making a large storage container of thermoplastic material for use underground capable of receiving waste water or other liquid.

Furthermore, the invention relates to a large storage container made with this method.

### Description of the prior art

As known a particular kind exists of storage containers for use underground and for this commonly said "buried", for storing liquid of different nature, in particular industrial and household waste water, sewage of various origin, rainwater, or water that can be stored and then used another time in agricultural, industrial or household fields.

Bulk storage containers for use underground are usually of cylindrical shape and are arranged in most cases with longitudinal axis arranged horizontally. The material commonly used to make storage containers for use underground are concrete, steel and plastic reinforced by incorporated fibreglass. Such materials have, however, some drawbacks. In fact, the storage containers made in concrete are subject to crack with time, whereas the storage containers of steel in contact with water with time are subject to corrosion.

Therefore, for having resistant and durable storage containers, high thickness or double wall storage containers are often used. This, negatively affects the overall weight of such storage containers that, therefore, cannot exceed a size limit for not complicating the transportation and handling when the installation is being constructed.

Storage containers of plastic reinforced by incorporated fibreglass, even if are lighter, however, require a complex and expensive construction.

With the adoption of thermoplastic materials, in particular polyethylene, the overall weight of storage containers for use underground has been remarkably reduced and the costs of production have dropped as well. However, for storage containers of plastic material the limit capacity is about 5000 litres, since the structure of the container under the action of ground weight tends to deform and then to collapse.

Modular storage containers for liquid are also known, as disclosed in FR2715385 and US4961670. In FR2715385 two end modules and several central modules are provided assembled in pairs by their ends. Each end module has an open end and each central module has two open ends. At the open ends an annular flange is provided for fixing two adjacent modules. This modular container is not adapted for being used underground, because it would be subject to collapse. US4961670 describes also end modules and central modules suitable for use underground. The modules have all ends closed and have a bell-shaped cross section. The modules are connected through the end walls.

### Summary of the invention

It is therefore a first feature of the present invention to provide a method for making a large storage container of moulded plastics for use underground that achieves high capacity without affecting the resistance of its structure.

It is another feature of the present invention to provide such a method that provides a large storage container for use underground that is light and then easy to make, to carry and to install.

It is a particular feature of the present invention to provide a large storage container for use underground made with this method and that has the same advantages.

These and other advantages are accomplished with the method for making a large storage container for use underground according to claim 1.

According to another aspect of the invention, it is provided a large storage container of moulded plastics for use underground according to claim 2.

Preferably, each modular element is a single part made by moulding, in particular rotational moulding.

In an exemplary embodiment of the invention, the large storage container for use underground comprises a first terminal element and a second terminal element among which at least an intermediate element is located. In particular, the intermediate element has two end flange portions suitable for coupling and being fastened with the flange portion the terminal element next to it, to provide a continuous body.

Furthermore, at each flanged connection a seal element can be provided.

In particular, at least one modular element of the whole container has a manhole for inspecting the inner space from the outside. In particular, the manhole in use remains visible in order to be easily accessible by an operator for maintenance of the storage container.

Advantageously, each modular element has a plurality of circumferential grooves suitable for providing a corrugated surface to increase the structural stiffness of the resulting large storage container. More in detail, the presence of the circumferential grooves increases remarkably the resistance of the structure to phenomena of contraction and compression owing to the strong pressures which is subject the large storage container when buried.

Preferably, each modular element is made of polymeric thermoplastic material selected from the group of: polyethylene, polypropylene, PVC, polyamide, polycarbonate, polyurethane, PET, that can be mixed at moulding or superimposed in layers with reinforcing agents such as: foams, fibres, charges.

### Brief description of the drawings

Further characteristics and the advantages of the method for making a large storage container for use underground, according to the present invention will be made clearer with the following description of an exemplary embodiment thereof, exemplifying but not limitative, with reference to the attached drawings wherein:
- figure 1 shows an elevational side view of a first exemplary embodiment of a large storage container of moulded plastics for use underground, according to the invention;
- figure 2 shows a perspective view of a terminal modular element of the large storage container of figure 1;
- figures 3 and 4 show diagrammatically perspective side elevational views of a detail of the matching and following connection between two adjacent modular elements of the large storage container of figure 1;
- figure 5 shows a perspective elevational side view of an intermediate modular element to arrange between the terminal modular elements of figure 2 in order to provide a large storage container for use underground of high capacity;
- figure 6 shows a perspective elevational side view of a connection flange of the stiffening walls of two adjacent modular elements;
- figure 7 shows a perspective view of the modular elements of figure 2 to which the connection flange of figure 6 is applied;
- figure 8 shows an elevational side view of an exemplary embodiment of a large storage container for use underground alternative to that of figure 1 obtained combining two modular elements of figure 2 and the intermediate element of figure 5;
- figure 9 shows a longitudinal cross section of a large storage container for use underground according to arrows IX-IX of figure 8.

### Description of a preferred exemplary embodiment

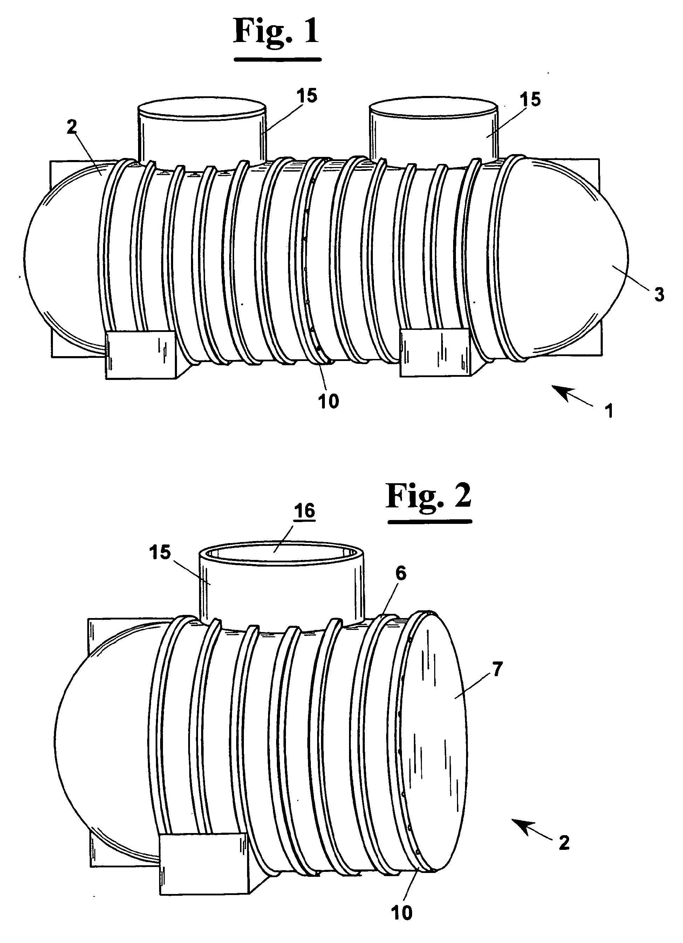

With reference to figure 1, a first exemplary embodiment of a large storage container for use underground 1, according to the present invention, comprises two modular hollow elements 2 having a flange portion 10. Each modular element 2 can be made by means of rotational moulding in a single part, in particular in polyethylene, and has an inner space 5 closed by a stiffening wall 7 at the flange portion 10. The two modular elements 2 are coupled and locked by means of respective flange portions 10 (figure 2).

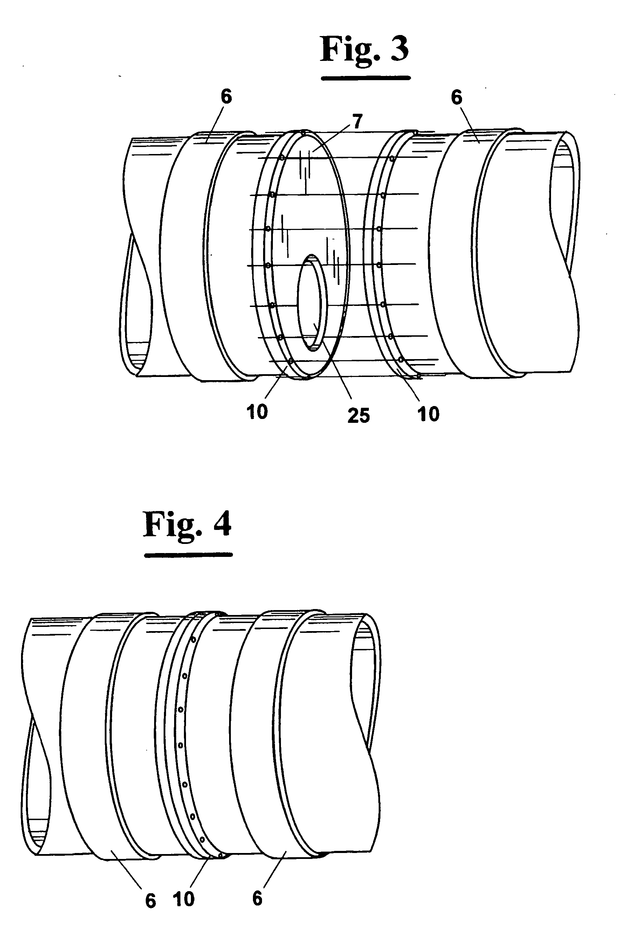

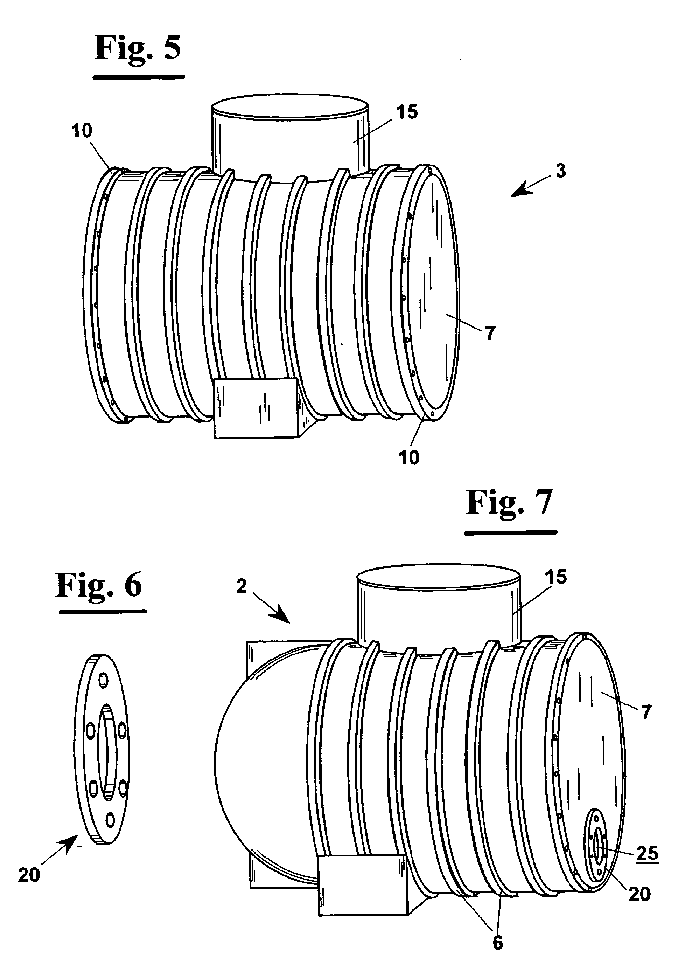

The inner space 5 of adjacent modular elements 2 are put in hydraulic communication through respective apertures 25 made in the respective stiffening walls 7 (figure 3). The portion of stiffening wall 7 that encircles the aperture gives to the large storage container 1 a high structural stiffness. This allows interconnecting in series many modular elements in order to provide a large storage container 1 of high capacity without the risk of a structural collapse. This is made arranging between two modular elements 2 one or several modular hollow elements 3 having a flange portion 10 and a stiffening wall 7 at each end (figure 5).

To assure a solid connection of the stiffening walls 7 of two adjacent modular elements 2, or 3, it is provided an auxiliary flanged connection by means of flanges 20 also arranged at the apertures 25 through which the respective hollow spaces 5 communicate. This way, the watertight of the seal is remarkably incremented avoiding the risk of drippings at the connection between the many modular elements.

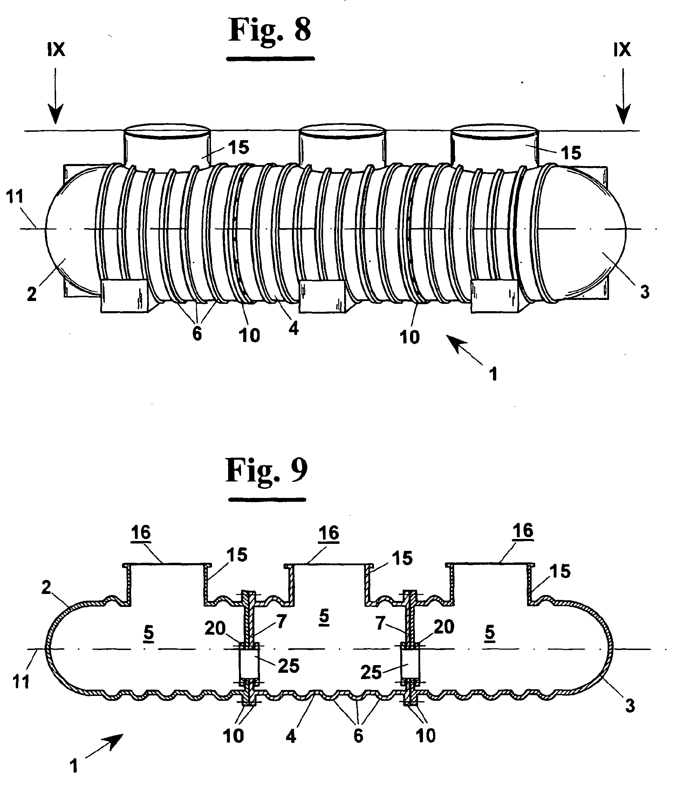

The large storage container 1 for use underground has a cylindrical hollow body and in operative conditions is arranged with longitudinal axis 11 horizontal with at least one visible manhole (figure 8). This way introduction of liquid in the large storage container 1 is allowed through the manhole 16 associated to a tubular neck 15 extending from the body (figure 9). Tubular neck 15 can be, furthermore, used for access to the inner space 5 of each modular element 2, or 3, in case of maintenance work. The surface of the large storage container 1 is corrugated by a plurality of circumferential grooves 6 arranged in planes substantially orthogonal to the longitudinal axis 11. They allow to increase further the stiffness of the structure and to assist extracting the modular elements 2, or 3, from the mould.

The foregoing description of a specific embodiment will so fully reveal the invention according to the conceptual point of view, so that others, by applying current knowledge, will be able to modify and/or adapt for various applications such an embodiment without further research and without parting from the invention, as described in the appended claims.

## Claims

1. Method for making a large storage container (1) for use underground providing the following steps:
- moulding at least a first (2) and a second (3) modular hollow element of plastic material having a flange portion (10);
- matching and locking said at least first and second modular element (2,3) at the respective flange portions (10) obtaining a hollow continuous body (1),
wherein at the end of said moulding step each modular element is a mainly closed hollow body, said modular elements having at said flange portion (10) a stiffening wall (7), wherein a step is provided of making at least one aperture (25) in said stiffening wall (7), said aperture (25) being suitable for connecting the respective hollow spaces of two adjacent modular elements (2,3), wherein a step is provided of mutually coupling the respective stiffening walls (7) of said adjacent modular elements (2,3) by a flanged auxiliary connection (20) made at said aperture (25).

2. Large storage container of moulded plastics for use underground comprising at least two hollow modular elements (2,3), each modular element (2,3) having a flange portion (10) suitable for being fastened to a respective flange portion (10) of an adjacent modular element (3,2) wherein each modular element (2,3) is a mainly closed hollow body, said modular elements having at said flange portion (10) a stiffening wall (7), at least one aperture (25) is made in said stiffening wall (7), said aperture (25) being suitable for connecting the respective hollow spaces of two adjacent modular elements (2,3), wherein a flanged auxiliary connection (20) is made at said aperture for mutually coupling the respective stiffening walls (7) of said adjacent modular elements (2, 3).

3. Large storage container for use underground, according to claim 2, wherein each modular element (2,3) is a single part made by moulding, in particular rotational moulding.

4. Large storage container for use underground, according to claim 2, comprising a first terminal element and a second terminal element between which at least an intermediate element is located, said intermediate element having two end flange portions suitable for coupling and being fastened to the flange portion of the terminal element next to it to provide a continuous body.

5. Large storage container for use underground, according to claim 2, wherein at each flange portion (10) a seal element is provided.

6. Large storage container for use underground, according to claim 2, wherein at least one modular element (2,3) of said whole container has a manhole (16) for access to said inner space from the outside, said manhole in use being visible.

7. Large storage container for use underground, according to claim 2, wherein said modular elements (2,3) have a plurality of circumferential grooves suitable for providing a corrugated surface that increases the structural stiffness of the whole large storage container.

8. Large storage container for use underground, according to claim 2, wherein each modular element is made of polymeric thermoplastic material selected from the group: polyethylene, polypropylene, PVC, polyamide, polycarbonate, polyurethane, PET, that can be mixed at moulding or superimposed in layers with reinforcing agents such as: foams, fibres, charges.

## Patentansprüche

1. Verfahren zum Herstellen eines Großbehälters (1) zur Verwendung unter der Erde, mit den folgenden Schritten:
- Formen zumindest eines ersten (2) und eines zweiten (3) modularen hohlen Elements aus Kunststoffmaterial mit einem Flanschabschnitt (10),
- Zusammenpassen und Verriegeln der zumindest einen ersten und zweiten modularen Elemente (2,3) an den jeweiligen Flanschabschnitten (10), um einen hohlen kontinuierlichen Körper (1) zu erhalten,
wobei am Ende des Formungsschritts jedes modulare Element ein überwiegend geschlossener hohler Körper ist, die modularen Elemente an dem Flanschabschnitt (10) eine Versteifungswand (7) aufweisen, wobei ein Schritt des Herstellens zumindest einer Öffnung (25) in der Versteifungswand (7) vorgesehen ist, die Öffnung (25) geeignet ist zum Verbinden der jeweiligen Hohlräume zweier benachbarter modularer Elemente (2,3), wobei ein Schritt des gegenseitigen Koppelns der jeweiligen Versteifungswände (7) der benachbarten modularen Elemente (2,3) durch eine Hilfsverbindung (20) mit Flansch an der Öffnung (25) vorgesehen ist.

2. Großbehälter aus geformtem Kunststoffmaterial zur Verwendung unter der Erde, mit zumindest zwei hohlen modularen Elementen (2,3), wobei jedes modulare Element (2,3) einen Flanschabschnitt (10) besitzt, der geeignet ist um an einem jeweiligen Flanschabschnitt (10) eines benachbarten modularen Elements (3,2) befestigt zu werden, wobei jedes modulare Element (2,3) ein überwiegend geschlossener hohler Körper ist, wobei die modularen Elemente an dem Flanschabschnitt (10) eine Versteifungswand (7) aufweisen,
wobei zumindest eine Öffnung (25) in der Versteifungswand (7) hergestellt ist, wobei die Öffnung (25) geeignet ist zur Verbindung der jeweiligen hohlen Räume zweier benachbarter modularer Elemente (2,3), wobei eine Hilfsverbindung (20) mit Flansch an der Öffnung zum gegenseitigen Koppeln der jeweiligen Versteifungswände (7) der benachbarten modularen Elemente (2,3) hergestellt ist.

3. Großbehälter zur Verwendung unter der Erde gemäß Anspruch 2, wobei jedes modulare Element (2,3) ein einzelnes Teil ist, das durch Formen, insbesondere durch Rotationsformen hergestellt ist.

4. Großbehälter zur Verwendung unter der Erde gemäß Anspruch 2, mit einem ersten Abschlusselement und einem zweiten Abschlusselement zwischen denen zumindest ein Zwischenelement gelegen ist, wobei das Zwischenelement zwei Endflanschabschnitte aufweist, die zum Koppeln und zum Befestigen an dem Flanschabschnitt des Abschlusslements, welches sich daneben befindet, geeignet ist, um einen durchgehenden Körper zu bilden.

5. Großbehälter zur Verwendung unter der Erde gemäß Anspruch 2, wobei an jedem Flanschabschnitt (10) ein Dichtungselement vorgesehen ist.

6. Großbehälter zur Verwendung unter der Erde gemäß Anspruch 2, wobei zumindest ein modulares Element (2,3) des gesamten Containers ein Zugangs- bzw. Einstiegsloch (16) zum Zugang zu dem Innenraum von der Außenseite aufweist, wobei das Einstiegsloch im Einsatz sichtbar ist.

7. Großbehälter zur Verwendung unter der Erde gemäß Anspruch 2, wobei die modularen Elemente (2,3) mehrere Umfangsnuten bzw. Umfangsausnehmungen aufweisen, die zum Vorsehen einer gewellten Oberfläche geeignet sind, welche die strukturelle Steifigkeit des gesamten Großbehälters erhöht.

8. Großbehälter zur Verwendung unter der Erde gemäß Anspruch 2, wobei jedes modulare Elemente aus polymerem thermoplastischem Material hergestellt ist, das aus der folgenden Gruppe ausgewählt ist: Polyethylen, Polypropylen, PVC, Polyamid, Polycarbonat, Polyurethan, PET, die beim Formen gemischt werden oder in Lagen mit Verstärkungsmitteln wie: Schäume, Fasern, Einsatzstoffe übereinandergelegt werden können.

## Revendications

1. Procédé pour fabriquer un grand conteneur de stockage (1) destiné à être utilisé sous terre, comprenant les étapes suivantes consistant à :
mouler au moins un premier (2) et un second (3) élément creux modulaire en matière plastique ayant une partie de rebord (10) ;
faire correspondre et bloquer lesdits au moins premier et second éléments modulaires (2, 3) au niveau des parties de rebord (10) respectives, obtenant un corps continu creux (1),
dans lequel à la fin de ladite étape de moulage, chaque élément modulaire est un corps creux principalement fermé, lesdits éléments modulaires ayant au niveau de ladite partie de rebord (10), une paroi de renforcement (7), dans lequel on prévoit une étape consistant à réaliser au moins une ouverture (25) dans ladite paroi de renforcement (7), ladite ouverture (25) étant appropriée pour raccorder les espaces creux respectifs des deux éléments modulaires (2, 3) adjacents, dans lequel on prévoit une étape consistant à coupler mutuellement les parois de renforcement (7) respectives desdits éléments modulaires (2, 3) adjacents par un raccordement auxiliaire à rebord (20) réalisé au niveau de ladite ouverture (25).

2. Grand conteneur de stockage en plastique moulé destiné à être utilisé sous terre comprenant au moins deux éléments modulaires creux (2, 3), chaque élément modulaire (2, 3) ayant une partie de rebord (10) appropriée pour être fixée à une partie de rebord (10) respective d'un élément modulaire (3, 2) adjacent, dans lequel chaque élément modulaire (2, 3) est un corps creux principalement fermé, lesdits éléments modulaires ayant au niveau de ladite partie de rebord (10) une paroi de renforcement (7), au moins une ouverture (25) est réalisée dans ladite paroi de renforcement (7), ladite ouverture (25) étant appropriée pour raccorder les espaces creux respectifs des deux éléments modulaires (2, 3) adjacents, dans lequel un raccordement auxiliaire à rebord (20) est réalisé au niveau de ladite ouverture pour coupler mutuellement les parois de renforcement (7) respectives desdits éléments modulaires (2, 3) adjacents.

3. Grand conteneur de stockage destiné à être utilisé sous terre, selon la revendication 2, dans lequel chaque élément modulaire (2, 3) est une partie unique réalisée par moulage, en particulier par moulage rotatif.

4. Grand conteneur de stockage destiné à être utilisé sous terre, selon la revendication 2, comprenant un premier élément terminal et un second élément terminal entre lesquels au moins un élément intermédiaire est positionné, ledit élément intermédiaire ayant deux parties de rebord d'extrémité appropriées pour coupler et être fixées à la partie de rebord de l'élément terminal après lui afin de fournir un corps continu.

5. Grand conteneur de stockage destiné à être utilisé sous terre, selon la revendication 2, dans lequel au niveau de chaque partie de rebord (10), on prévoit un élément formant joint d'étanchéité.

6. Grand conteneur de stockage destiné à être utilisé sous terre, selon la revendication 2, dans lequel au moins un élément modulaire (2, 3) dudit conteneur dans son ensemble a un trou de regard (16) pour avoir accès audit espace interne depuis l'extérieur, ledit trou de regard en cours d'utilisation étant visible.

7. Grand conteneur de stockage destiné à être utilisé sous terre, selon la revendication 2, dans lequel lesdits éléments modulaires (2, 3) ont une pluralité de rainures circonférentielles appropriées pour fournir une surface ondulée qui augmente la rigidité structurelle du grand conteneur de stockage dans son ensemble.

8. Grand conteneur de stockage destiné à être utilisé sous terre, selon la revendication 2, dans lequel chaque élément modulaire est réalisé à partir d'un matériau polymère thermoplastique choisi dans le groupe comprenant le polyéthylène, le polypropylène, le PVC, le polyamide, le polycarbonate, le polyuréthane, le PET, qui peuvent être mélangés au moulage ou superposés en couches avec des agents de renforcement tels que : des mousses, des fibres, des charges.
